Europäisches Patentamt

European Patent Office

Office européen des brevets

(11) Veröffentlichungsnummer: **0 236 563**
**A1**

(12) **EUROPÄISCHE PATENTANMELDUNG**

(21) Anmeldenummer: **86116871.4**

(22) Anmeldetag: **04.12.86**

(51) Int. Cl.³: **F 21 M 3/24**
**B 60 Q 1/46, F 21 Q 1/00**

(30) Priorität: **19.12.85 DE 3545023**

(43) Veröffentlichungstag der Anmeldung:
**16.09.87 Patentblatt 87/38**

(84) Benannte Vertragsstaaten:
**BE CH DE FR GB IT LI NL SE**

(71) Anmelder: **Wegmann & Co. GmbH**
**August-Bode-Strasse 1**
**D-3500 Kassel(DE)**

(72) Erfinder: **Abels, Frank**
**Ellernbusch 9**
**D-3042 Munster(DE)**

(72) Erfinder: **Liebel, Peter**
**Am Rande 14**
**D-3500 Kassel(DE)**

(74) Vertreter: **Feder, Heinz, Dr. et al,**
**Dipl.-Ing. P.-C. Sroka, Dr. H. Feder Dipl.-Phys. Dr. W.-D.**
**Feder, Patentanwälte Dominikanerstrasse 37**
**D-4000 Düsseldorf 11(DE)**

(54) Signaleinrichtung für Kampffahrzeuge, insbesondere für Kampfpanzer.

(57) Eine Signaleinrichtung für Kampffahrzeuge, insbesondere für Panzer, mit einer Blinkvorrichtung (1), bei der das abstrahlende Element durch eine motorisch angetriebene Blende (7) in vorgegebenen Richtungen und vorgegebenem Rhythmus abdeckbar ist. Die Blinkvorrichtung (1) ist so ausgebildet, daß sie ausschließlich Signale im Wärmebildspektrum abstrahlt. Als abstrahlendes Element dient ein Zylinderrohr (15), an dessen innerer Mantelfläche eine Heizmatte (14) angeordnet ist. Innerhalb des Zylinderrohres (15) ist axial ein Elektromotor (10) angeordnet, der eine außerhalb des Zylinderrohrs (15) angeordnete umlaufende Blende (7) antreibt. Zwischen Elektromotor (10) und Heizmatte (14) ist eine wärmeisolierende Schicht (12, 13) angeordnet. Durch entsprechende Ansteuerung des Elektromotors (10) von einem Regelgerät im Inneren des Kampffahrzeugs aus, kann die Umlauffrequenz und die zwischen einzelnen Umläufen eincodierten Pausen vorgegeben werden.

Fig. 2

Die Erfindung betrifft eine Signaleinrichtung für Kampffahrzeuge, insbesondere für Kampfpanzer, mit einer Blinkvorrichtung, bei der das abstrahlende Element durch eine motorisch angetriebene Blende in vorgegebenen Richtungen und vorgegebenem Rhythmus abdeckbar ist.

Im Gefechtseinsatz ist es erforderlich, daß Kampffahrzeuge, insbesondere Kampfpanzer, zu Zwecken der Gefechtsaufklärung über die eigenen Linien fahren, um dann später, nach Erfüllung ihres Auftrages, wieder von den eigenen Truppen aufgenommen zu werden. Sofern dieses bei Tage stattfindet, werden die eigenen Fahrzeuge bei der Rückkehr von den in Sicherung befindenden eigenen Truppen aufgrund ihrer Silhouette erkannt und deshalb nicht, obwohl vor den eigenen Linien befindlich, beschossen.

Bei Dunkelheit oder schlechter Sicht ist dieses Verfahren der Erkennung nicht anwendbar und es wurde in der Praxis mit Blinkleuchten und ähnlichen Einrichtungen, die im Bereich des sichtbaren Lichtes liegende Signale abstrahlen, gearbeitet.

Diese bekannten Verfahren haben den wesentlichen Nachteil, daß auch der Feind mit bloßem Auge die Blinkzeichen erkennen kann und damit eine Gefährdung des blinkenden Fahrzeuges gegeben ist.

Seitdem bei den meisten modernen Armeen Wärmebildgeräte zur Aufklärung der Gefechtsverhältnisse bei Nacht eingesetzt werden, können zwar Fahrzeuge auf relativ große Entfernungen bei Dunkelheit entdeckt werden, jedoch ist die Identifizierung, ob es sich um feindliche oder eigene Fahrzeuge handelt, mit Hilfe des Wärmebildes kaum möglich, so daß für den Beobachter immer Zweifel bestehen, um was für ein Fahrzeug es sich im Vorfeld handelt.

Die der Erfindung zugrunde liegende Aufgabe bestand darin, eine Signaleinrichtung für Kampffahrzeuge, insbesondere für Kampfpanzer der eingangs erwähnten Art zu schaffen, die einfach aufgebaut ist und die den mit Wärmebildgeräten beobachtenden Truppen die Möglichkeit gibt, eindeutig zu unterscheiden, ob die sich annähernden Kampffahrzeuge im Vorfeld zu eigenen oder feindlichen Kräften gehören.

Die Lösung dieser Aufgabe erfolgt erfindungsgemäß mit den Merkmalen aus dem kennzeichnenden Teil des Patentanspruchs 1.

Vorteilhafte Ausführungsformen der erfindungsgemäßen Signaleinrichtung sind in den Unteransprüchen beschrieben.

Der Grundgedanke der Erfindung besteht darin, auf dem Kampffahrzeug eine künstliche Wärmequelle anzuordnen, die ausschließlich Signale im Wärmebildspektrum, also im Infrarotbereich, abstrahlt. Mit einer solchen Signaleinrichtung ist es möglich, in einem als Code zu verstehenden Rhythmus die Blinkvorrichtung auf- oder abzublenden. Dies eröffnet die Möglichkeit, bei den eigenen Truppen im täglichen Wechsel einen bestimmten Auf- und Abblendecode festzulegen, aus dem die beobachtenden Truppen erkennen können, ob es sich bei einem sich nähernden Kampffahrzeug um eigene Kräfte handelt.

Wie weiter unten anhand eines Ausführungsbeispiels näher erläutert, wird bei einer besonders vorteilhaften Ausführungsform der erfindungsgemäßen Signaleinrichtung als abstrahlendes Element eine Wärmequelle verwendet, die die Form eines Zylinderrohres besitzt, das von innen elektrisch beheizt wird. Um dieses Zylinderrohr wird die Halbschale eines weiteren Zylinderrohres angeordnet, die mit Hilfe eines im Zylinderrohr integrierten Elektromotors angetrieben wird, so daß aus der Sicht eines entfernt stehenden Beobachters die Wärmequelle von der rotierenden Halbschale rhythmisch abgedeckt wird und pulsierend erscheint.

Der vorzusehende Code wird vorteilhaft durch ein elektrisches Steuergerät, beispielsweise ein an sich bekanntes programmierbares Regelgerät, erzeugt, mit dessen Hilfe einprogrammiert werden kann, wieviele Umdrehungen die als Blende wirkende Halbschale machen soll und welche Pausenlängen zwischen den Umdrehungen auftreten sollen. So ist es z.B. denkbar als Code festzulegen: 8 Umdrehungen, 3 Sekunden Pause, 6 Umdrehungen, 3 Sekunden Pause, wieder 8 Umdrehungen.

Ferner kann vorgesehen werden, die Blinkvorrichtung gegen mechanische Beschädigungen durch einen Schutzkorb aus einem Stahlgeflecht zu schützen. Über diesen Schutzkorb kann eine etwa die Hälfte des Abstrahlbereiches der Wärmequelle abdeckende zusätzliche Blende gesetzt werden, durch die verhindert wird, daß in eine ungewünschte Richtung ein Wärmebildsignal abgegeben wird. Diese zusätzliche Blende kann auch verschwenkbar ausgebildet sein.

Mit der erfindungsgemäßen Signaleinrichtung werden folgende Vorteile erzielt:

a) Truppenteile, die sich vor den eigenen Linien befinden, brauchen nicht mehr zu befürchten, als feindliche Kräfte identifiziert und bekämpft zu werden.

b) Sicherungskräfte können frühzeitig unterscheiden, ob annähernde Fahrzeuge eigene oder fremde sind und demzufolge früher den Feuerkampf eröffnen.

c) Die Verwendung eines Wärmebildsignals verhindert, daß nicht mit Wärmebildgeräten ausgerüstete Gegner, insbesondere Infanteristen und Panzernahbekämpfer, anhand von sonst üblichen Blinksignalen im Bereich des sichtbaren Lichtes die Fahrzeuge frühzeitig erkennen.

d) Durch die mögliche Codierung der Signale ist auf einfache Art eine Freund/Feindkennung gegeben.

e) Die erfindungsgemäße Signaleinrichtung kann auch abgesetzt von Fahrzeugen zur Markierung von Lückenwegen, Sperren usw. verwendet werden, so daß eigene Kräfte ausgerüstet mit Wärmebildgeräten sie erkennen können.

Im folgenden wird ein Ausführungsbeispiel für eine Signaleinrichtung nach der Erfindung anhand der Zeichnungen erläutert.

In den Zeichnungen zeigen:

Fig. 1 in perspektivischer Darstellung einen Kampfpanzer mit darüber angeordneter vergrößert dargestellter Signaleinrichtung;

Fig. 2 ein Schnitt durch die Blinkvorrichtung der Signaleinrichtung nach Fig. 1;

Fig. 3 in einer Aufsicht eine elektrische Steuereinrichtung für die Signaleinrichtung nach Fig. 1 und 2.

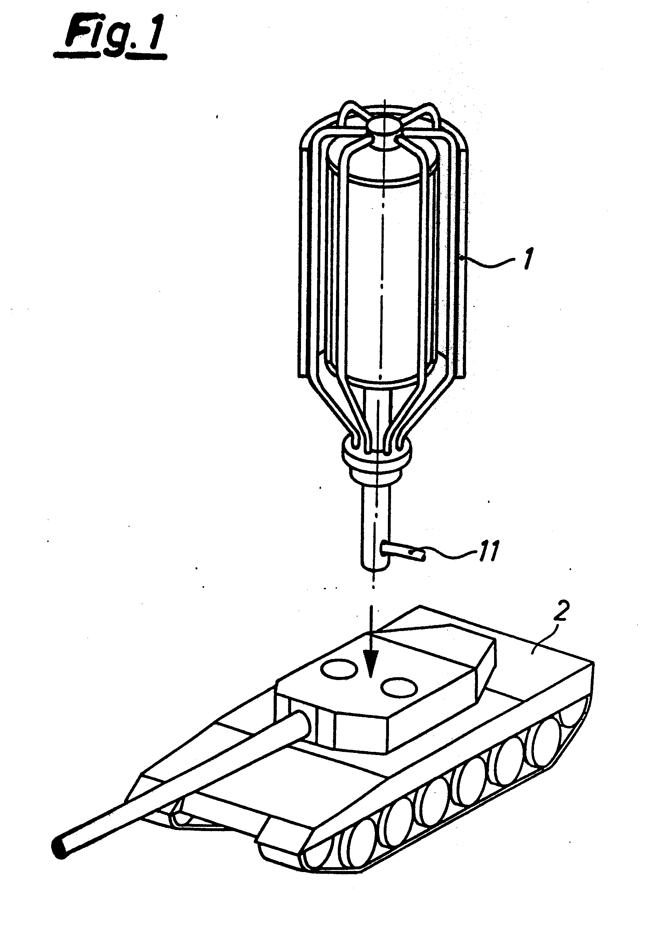

Wie in Fig. 1 angedeutet, ist auf einem Kampfpanzer 2 herkömmlicher Bauart, beispielsweise auf der Turmmitte, die Blinkvorrichtung 1 einer Signaleinrichtung angeordnet, die über ein Anschlußkabel 11 mit einer elektrischen Steuereinrichtung im Turminneren verbunden ist.

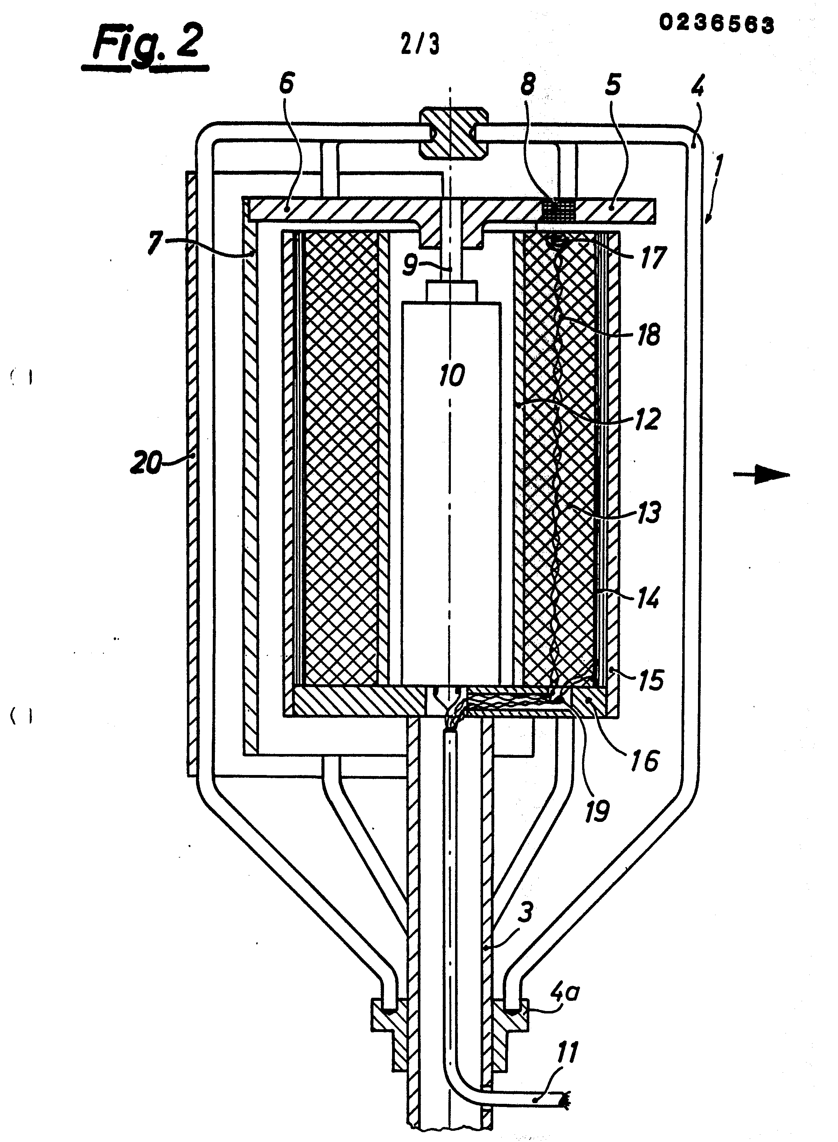

In Fig. 2 ist die Blinkvorrichtung 1, die ausschließlich Signale im Wärmebildspektrum abstrahlen soll, genauer dargestellt.

Die Blinkvorrichtung 1 besitzt ein Halterohr 3, das fest mit dem Kampfpanzer 2 verbunden ist und durch das das Anschlußkabel 11 für die elektrischen Zuführungsleitungen geführt ist. Auf dem Halterohr 3 ist eine Grundplatte 16 montiert, über der ein Zylinderrohr 15 angeordnet ist, das als abstrahlendes Element dient. An der inneren Mantelfläche des Zylinderrohres 15 ist eine beispielsweise als Heizfolie ausgebildete Heizmatte 14 angeordnet, die über Anschlußleitungen 19 mit einer Stromquelle im Inneren des Fahrzeugs verbunden ist. Weiterhin ist auf der Grundplatte 16 axial ein Elektromotor 10 mit nach oben herausgeführter Abtriebswelle 9 angeordnet. Zwischen der Heizmatte 14 und dem Elektromotor 10 ist radial von außen nach innen zunächst eine Schaumstoffisolierung 13 und ein Trennrohr 12 angeordnet, welche eine Abstrahlung der Heizmatte 14 nach innen zum Elektromotor 10 hin verhindert. Das als abstrahlendes Element dienende Zylinderrohr 15 kann an seiner Außenseite von einer umlaufenden, insgesamt mit 5 bezeichneten Blende abgedeckt werden. Die Blende besteht aus einer auf der Abtriebswelle 9 des Elektromotors 10 fest angeordneten Antriebsscheibe 6, die ein beispielsweise als Halbzylinder ausgebildetes Blendenblech 7 trägt, das das Zylinderrohr 15 teilweise umfaßt. In der Antriebsscheibe 6 ist ein Permanentmagnet 8 angeordnet, der bei einer Drehung der Antriebsscheibe 6 umläuft. Gegenüber der Umlaufbahn des Permanentmagneten 8 ist in der oberen Stirnfläche der Schaumstoffisolierung 13 ein Reed-Kontakt 17 angeordnet, der über eine Verbindungsleitung 18 mit der weiter unten beschriebenen elektrischen Steuereinrichtung im Inneren des Fahrzeugs verbunden ist. Auch die Zuleitungen für den Elektromotor 10 sind zusammen mit den Leitungen 18 und 19 durch das Anschlußkabel 11 in das Innere des Fahrzeugs geführt.

Außerhalb der Drehblende 5 ist ein Schutzkorb 4 angeordnet, der aus einem Stahlgeflecht besteht und über eine Befestigungsvorrichtung 4a mit dem Halterohr 3 verbunden ist. Weiterhin ist am Schutzkorb 4 eine als Halbschale ausgebildete zusätzliche Blende 20 angeordnet, die eine Abstrahlung in eine unerwünschte Richtung verhindern soll. Wenn die Befestigung 4a des Schutzkorbes 4 am Halterohr 3 drehbar angeordnet ist, kann diese zusätzliche Blende zusammen mit dem Schutzkorb verschwenkt werden, damit die Richtung, in der die Abschirmung durch die zusätzliche Blende 20 erfolgt, verändert werden kann.

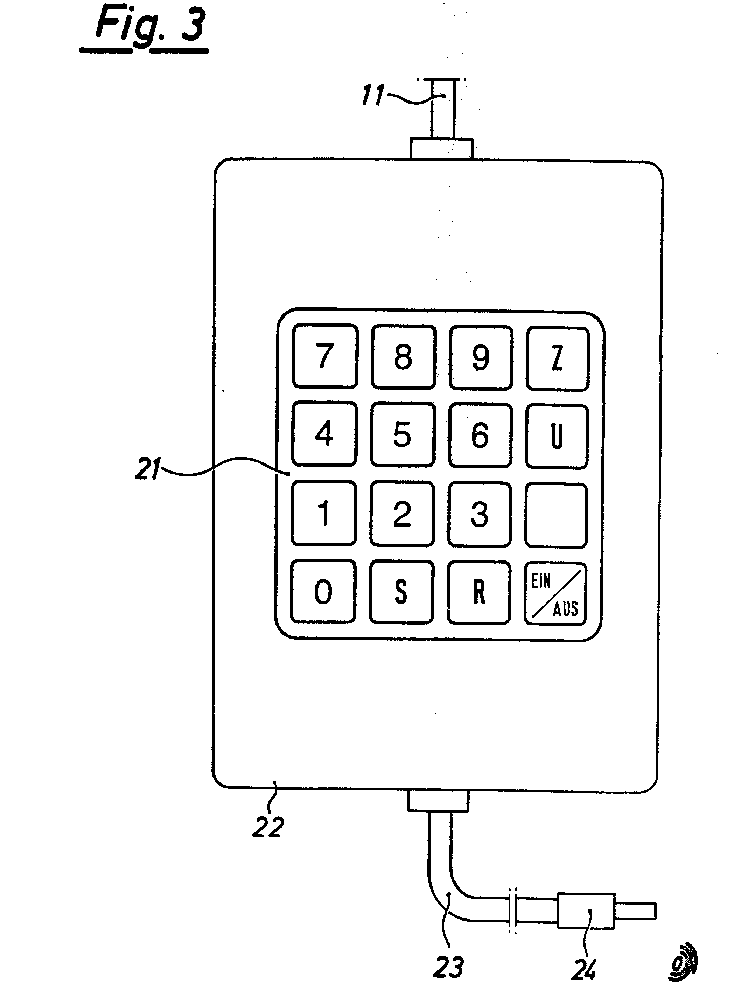

Die im Inneren des Kampfpanzers 2 angeordnete elektrische Steuereinrichtung ist in Fig. 3 dargestellt. Sie weist ein programmierbares Regelgerät 22 herkömmlicher Bauart auf mit einem Bedienungsfeld 21, dem Steuerkabel 11 und einem Stromversorgungskabel 23 mit Bordstecker 24.

Die Funktionsweise der in den Fig. 1 bis 3 dargestellten Vorrichtung ist folgende:

Der Strom aus dem Bordnetz des Kampfpanzers 2 fließt beim Einschalten der Anlage über das Kabel 11 zur Heizmatte 14, die das Zylinderrohr 15 erwärmt. Von der erwärmten Fläche des Zylinderrohres 15 geht die Wärmestrahlung nach außen, so daß sie von Wärmebildgeräten aufgenommen werden kann. Das Blendenblech 7 der umlaufenden Blende 5 dreht sich in gewünschter Häufigkeit um das Wärmerohr, indem der Elektromotor 10 für eine vorgegebene Zeit mit Strom versorgt wird. Die Anzahl der Drehungen wird über den Reed-Kontakt 17 registriert, wobei bei jeder Umdrehung des Permanentmagneten 8 ein Impuls erzeugt und dem Regelgerät 22 zugeführt wird.

Am Bedienungsfeld 21 des Regelgerätes 22 können Steuerbefehle eingegeben werden. Das als übliches 16-Tastenfeld ausgebildete Bedienungsfeld enthält Zahlentasten 0 bis 9 sowie einen Schalter "EIN/AUS", durch den die Anlage in Betrieb genommen werden kann. Bei Betätigung einer Taste "U" kann die Anzahl der im Code vorgesehenen Umdrehungen einprogrammiert werden. Bei Betätigung der Taste "Z" kann die im Code vorgegebene Unterbrechungszeit in Sekunden zwischen den Intervallen auf der Tastatur mit den Ziffern eingegeben werden. Bei Betätigung der Taste "S" Start fängt das Gerät im vorgegebenen Code an zu laufen. Dabei erlischt eine Leuchtanzeige in der Taste "Z" und eine andere in der Taste "S" leuchtet auf.

0236563

- 8 -

Soll eine Änderung des Programms vorgenommen werden, so wird die Taste "R" zur Rückstellung betätigt und der Programmierungsvorgang kann erneut beginnen. Der Elektromotor 10 läuft solange, bis die Anzahl der am Regelgerät 22 einprogrammierten Umdrehungen vom Reed-Kontakt 17 als Impulse registriert wurden. Dann schaltet der Elektromotor 10 ab und die am Regelgerät 22 vorgegebene Schaltdauerpause wird eingeleitet. Bei dem dargestellten Ausführungsbeispiel ist eine Taste des Bedienungsfeldes 21 für Sonderfunktionen freigehalten.

Patentansprüche:

1. Signaleinrichtung für Kampffahrzeuge, insbesondere für Kampfpanzer, mit einer Blinkvorrichtung, bei der das abstrahlende Element durch eine motorisch angetriebene Blende in vorgegebenen Richtungen und vorgegebenem Rhythmus abdeckbar ist, dadurch gekennzeichnet, daß die Blinkvorrichtung (1) so ausgebildet ist, daß sie ausschließlich Signale im Wärmebildspektrum abstrahlt.

2. Signaleinrichtung nach Anspruch 1, dadurch gekennzeichnet, daß als abstrahlendes Element eine Wärmequelle dient, die eine an der inneren Mantelfläche eines Zylinderrohrs (15) angeordnete elektrisch beheizbare Heizmatte (14) aufweist, wobei innerhalb des Zylinderrohrs (15) ein Elektromotor (10) angeordnet ist, der eine außerhalb des Zylinderrohrs (15) angeordnete umlaufende Blende (7) antreibt und zwischen Elektromotor (10) und Heizmatte (14) eine wärmeisolierende Schicht (12, 13) angeordnet ist.

3. Signaleinrichtung nach Anspruch 2, dadurch gekennzeichnet, daß an der umlaufenden Blende (7) ein Permanentmagnet (8) angeordnet ist und an einer vorgegebenen Stelle gegenüber der Umlaufbahn des Permanentmagneten (8) ein fest mit dem Zylinderrohr (15) verbundener Reed-Kontakt angeordnet ist, dessen Signale einer die Umlauffrequenz der Blende (7) steuernden elektrischen Steuereinrichtung (22) zugeführt werden.

4. Signaleinrichtung nach einem der Ansprüche 1 bis 3, dadurch gekennzeichnet, daß die Blinkvorrichtung (1) von einem Schutzkorb umgeben ist.

5. Signaleinrichtung nach einem der Ansprüche 1 bis 4, dadurch gekennzeichnet, daß außerhalb der Blinkvorrichtung (1) eine vorgegebene Abstrahlwinkel abdeckende zusätzliche Blende (20) angeordnet ist.

6. Signaleinrichtung nach Anspruch 4 und 5, dadurch gekennzeichnet, daß die zusätzliche Blende (20) als zylindrische Halbschale ausgebildet ist, die außerhalb des Schutzkorbes (4) angeordnet ist.

7. Signaleinrichtung nach Anspruch 6, dadurch gekennzeichnet, daß die zusätzliche Blende (20) um die Längsachse des abstrahlenden Zylinderrohres (15) schwenkbar angeordnet ist.

8. Signaleinrichtung nach einem der Ansprüche 3 bis 7, dadurch gekennzeichnet, daß als elektrische Steuereinrichtung ein an sich bekanntes programmierbares Regelgerät (22) dient, mit dem die Anzahl der Umdrehungen der umlaufenden Blende (7) und die Dauer der zwischen den Umdrehungen liegenden Pausen vorgebbar ist.

_**Fig.1**_

**Fig. 2**

## <u>Fig. 3</u>

| EINSCHLÄGIGE DOKUMENTE | | EP 86116871.4 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - B2 - 2 131 512 (SWF-SPEZIAL-FABRIK FUR AUTOZUBEHÖR GUSTAV RAU GMBH) <br><br> * Gesamt * <br><br> ---- | | F 21 M 3/24 <br> B 60 Q 1/46 <br> F 21 Q 1/00 |

|  | RECHERCHIERTE SACHGEBIETE (Int Cl 4) |
|---|---|
|  | B 60 Q 1/00 <br> F 21 M 3/00 <br> F 21 Q 1/00 <br> F 21 V 11/00 <br> F 41 H 7/00 |

Der vorliegende Recherchenbericht wurde für alle Patentansprüche erstellt.

| Recherchenort | Abschlußdatum der Recherche | Prüfer |
|---|---|---|
| WIEN | 29-05-1987 | KALANDRA |